Europäisches Patentamt

European Patent Office

Office européen des brevets

(11) Publication number: **0 336 581**
**A2**

## EUROPEAN PATENT APPLICATION

(21) Application number: 89302578.3

(22) Date of filing: 16.03.89

(51) Int. Cl.⁴: **G06F 11/00 , G06F 15/40**

(30) Priority: 08.04.88 US 179178

(43) Date of publication of application:
**11.10.89 Bulletin 89/41**

(84) Designated Contracting States:
**DE FR GB IT**

(71) Applicant: **International Business Machines
Corporation
Old Orchard Road
Armonk, N.Y. 10504(US)**

(72) Inventor: **Hill, Reginal Raynard
17018 Simsbrook Drive
Pflugerville Texas 78660(US)**
Inventor: **Hrabik, Richard Joseph
Route 6 Box 407
Leander Texas 78641(US)**

(74) Representative: **Grant, Iain Murray
IBM United Kingdom Limited Intellectual
Property Department Hursley Park
Winchester Hampshire SO21 2JN(GB)**

(54) Problem determination in computer systems.

(57) Filtering the retrieval of records from a plurality of records, generated internally of and by a computer system having a user interface in response to the operation or otherwise thereof and stored in the computer system, is achieved by prompting the user to select one of a plurality of problem determining functions and thereafter to specify one or more parameters to be used with the selected function, the record retrieved being identified by the system in response to the parameters selected in the context of the selected problem determining function.

The user may retrieve selected error data records by specifying criteria and activating an error services utility. Only the error record data which satisfies the specified criteria will be printed or displayed. The user may also retrieve selected message data records by specifying criteria and activating an message services utility. The user may specify the display of selected messages which are generated by a specified component within the computer system. Moreover, after displaying a selected message, the user may request the system to display more detailed information regarding the displayed message.

EP 0 336 581 A2

FIG. 2

## PROBLEM DETERMINATION IN COMPUTER SYSTEMS

This invention relates generally to the determination of problems in computer systems.

Problems or errors can occur in many different ways in a computer system as a result, for example, of software component failure or of some function, not of itself failed, becoming unavailable. It may well be that a user of the computer system is not immediately aware that he has a problem and thus can continue processing, only to discover later that his efforts have been wasted. This is particularly true in the case of a multi-tasking computer system where a problem may have occurred in a background task with which he is not immediately interfacing and which will not become apparent until much later. As error data or error messages may be generated independently by a plurality of components within the system and, within a multi-tasking system, with respect to a plurality of tasks, the job of analysing the problems reported by such data and/or messages becomes complex quite rapidly. In practice, this means that the user may have to decipher large amounts of data in order to trace a specific fault which may, therefore, be difficult to pinpoint in time.

It is the object of the invention to enable the average user to retrieve specific error data and/or messages in a computer system in a user friendly manner.

In accordance with a first aspect of the invention, there is provided a method of filtering the retrieval of records from a plurality of records, generated internally of and by a computer system having a user interface in response to the operation or otherwise thereof, as opposed to the execution of application programs thereby, and stored in the computer system, the method comprising the steps of:

prompting a user, via the user interface, to select one of a plurality of problem determining functions;

in response to the selection made, prompting the user, via the user interface, to specify one or more parameters to be used with the selected function; and

in response to the parameters selected, indicating and retrieving a record from the stored records as a function of the parameters in the context of the selected problem determining function.

As disclosed hereinafter by way of example, filtering the retrieval of records from a plurality of records, generated internally of and by a computer system in response to the operation or otherwise thereof and stored in the computer system, is achieved by prompting the user to select one of a plurality of problem determining functions and thereafter to specify one or more parameters to be used with the selected function, the record retrieved being identified by the system in response to the parameters selected in the context of the selected problem determining function. The user may retrieve selected error data records by specifying criteria and activating an error services utility. Only the error record data which satisfies the specified criteria will be printed or displayed. The user may also retrieve selected message data records by specifying criteria and activating an message services utility. The user may specify the display of selected messages which are generated by a specified component within the computer system. Moreover, after displaying a selected message, the user may request the system to display more detailed information regarding the displayed message. The present invention will be described further by way of example with reference to an embodiment thereof as illustrated in the accompanying drawings, in which:

Figure 1 is a block diagram of a computer system on which the method of the present invention may be employed;

Figure 2 is a flow diagram illustrating the detailed steps of the method of the present invention; and

Figs. 3 through 10 are illustrations of display screens which are employed by user of the computer system in retrieving records from a communication software system.

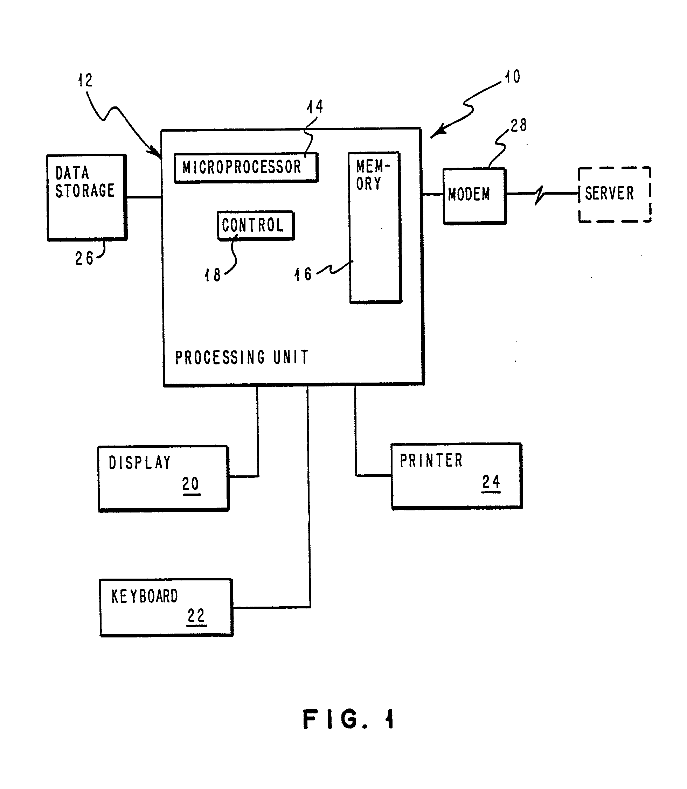

Referring to Fig. 1, there is shown a computer system 10 in which the present invention may be implemented. System 10 includes a central processing unit 12 having a microprocessor 14, a memory system 16 and a control system 18 which functions to control input/output operations in addition to the interaction between the microprocessor and the memory system. System 10 also includes a group of conventional peripheral units including a display device 20, a keyboard 22, a printer 24, a data storage unit 26 and a modem 28. Since the details of the above described functional systems form no part of the present invention and can be found in the prior art, only a brief functional description of each of the systems will be set forth.

The processing unit 12 corresponds to the "system unit" of a personal computer system such as the IBM XT or the IBM AT or the IBM Personal Systems/2 computer systems. The central processing unit 12 is provided with a multitasking operating system program such as the IBM Operating System/2 which is normally employed to run the systems. The operating system program is stored in memory system 16 along with one or more application programs that the user has selected to run. Depending on the capacity of the memory system 16 and the size of the application programs, portions of these programs, as needed, may be transferred to the memory system 16 from the data storage unit 26 which may include, for example, a hard disk drive and a diskette drive. The basic function of the data storage unit 26 is to store programs and data which are employed by the system 10 and which may readily be transferred to the memory system 16 when needed. The function of the diskette drive is to provide a removable storage function for entering programs and data into the system, and a vehicle for storing data in a form that is readily transportable for use on other computer systems.

Display device 20 and keyboard 22 together provide for an interactive operation of the computer system 10 wherein the interpretation that the computer system gives to a specific keystroke by the user depends, in substantially all situations, on what is being displayed to the user at that point in time.

In certain situations, the user, by entering commands into the computer system 10, causes the system to perform a certain function. In other situations, the computer system 10 requests the entry of certain data, generally by displaying a prompt type of menu/message screen. The depth of the interaction between the user and the computer system 10 varies by the type of operating system and the application program.

As noted above, computer system 10 includes the printer 24 which functions to provide a hard copy output of data developed or stored in the computer system. The modem 28 functions to transfer data from the computer system 10 to a remote host system or server system through one or more communication links which may be a commercial type link or a dedicated communications link.

System 10 includes a communication software sub-system which enables an end user of system 10 to perform various communication task within the operating system. For implementing the invention, the communication sub-system includes problem determination logic which enables the user to request the display of specific errors or to specify parameters for determining messages generated by a specific component of the communication sub-system. Moreover, the problem determination logic enables the user to request all of the errors or messages generated by a specific component of the communication sub-system. In this particular example, the communications sub-system and the problem determination logic are implemented by software stored in the memory system 16.

Messages present user friendly text to the user which sets forth the cause of any interruption of the execution of a process or task within the software system. Error data also presents technical information, which is typically in hexadecimal representation, to the user in a friendly manner. These requests become extremely important in a multitasking environment wherein the user may activate a first task, then goes on during the execution of the first task to activate or monitor a second task. If during the time the user is activating or monitoring the second task, the first task fails. The user generally is unaware of the failure of the first task until the user decides to return to the first task. The preferred embodiment of the present invention displays a message to the user irrespective of which task the user is presently activating or monitoring. The user may then access a message log or error log for more information. The user may request more detailed information after viewing the message log.

The end user of system 10, after activating the problem determination program, may activate message service utilities or error log service utilities program. The error log service utilities provide a common interface for logging error data. The error data is typically generated as a result of a communication adapter or communication link type errors occurring at a data link controller (DLC) level. The error data facilitates the management of a communication network and provides the necessary data for problem determination in the event of a network failure. Once the error data is stored in a log, the error log service utility allows the data to be printed or visually displayed. In the particular embodiment of this invention detailed hereinafter, all error data is stored in a file or log which is created when the operating system executing on system 10 is configured.

The message service utilities provides an interface for displaying and logging messages within the operating system. Primarily, the message service utilities provides a mechanism for relaying message information to the user which may not be related to current screen activity being viewed by the user. The message service utilities logs all messages to a log to provide a history of the messages which have been generated by the various components within the operating system. This history is very useful in problem determination in that it provides a sequence of errors which led to a particular failure of the communication system.

Within the communication software system, the actions of the various components thereof may facilitate the generation of error data and/or messages. The various components or the actions thereof are referred to as originators within the problem determination program environment. For purposes of illustration and not limitation, an originator of a message or error may be the failure of a file transfer, a data link being prematurely terminated, or a terminal emulation failure.

Set out below is an illustration of the problem determination program for determining a failure within the software communication program. The problem determination program is in program design language from which source code and machine code are derivable. In the following general description of the problem determination program, it is to be assumed that system 10 is under mouse and keyboard device control. Moreover, it is assumed that the problem determination program is invoked from a driver program contained in the operating system which facilitates the display of all of the screen panels and the monitoring of the keyboard 22.

The print sub-routine is called by the error log services sub-routine. A print criteria panel is displayed which allows the user to enter specific search parameters. These search parameters facilitate the printing of a record which contains errors matching the specified parameters.

The display sub-routine is called by the error log services sub-routine. A display criteria panel is displayed which allows the user to enter specific search parameters. The display sub-routine then searches the appropriate error log record for the errors which match the search parameters. These search parameters facilitate the display of a record which only contains errors matching the specified parameters. Thereafter, the record is formatted and displayed to the user. The user after the record is displayed, may scroll through the file by activating the appropriate function keys.

## TABLE 1 - MAIN PROCESS LOGIC

```
DO WHILE ESCAPE KEY IS NOT ACTIVATED
    INITIALISE PROBLEM DETERMINATION FIELDS
    IF ERROR SELECTED THEN
        CALL ERROR LOG SERVICES
    ENDIF
    IF MESSAGE SELECTED THEN
        CALL MESSAGE SERVICES
    ENDIF
ENDDO
```

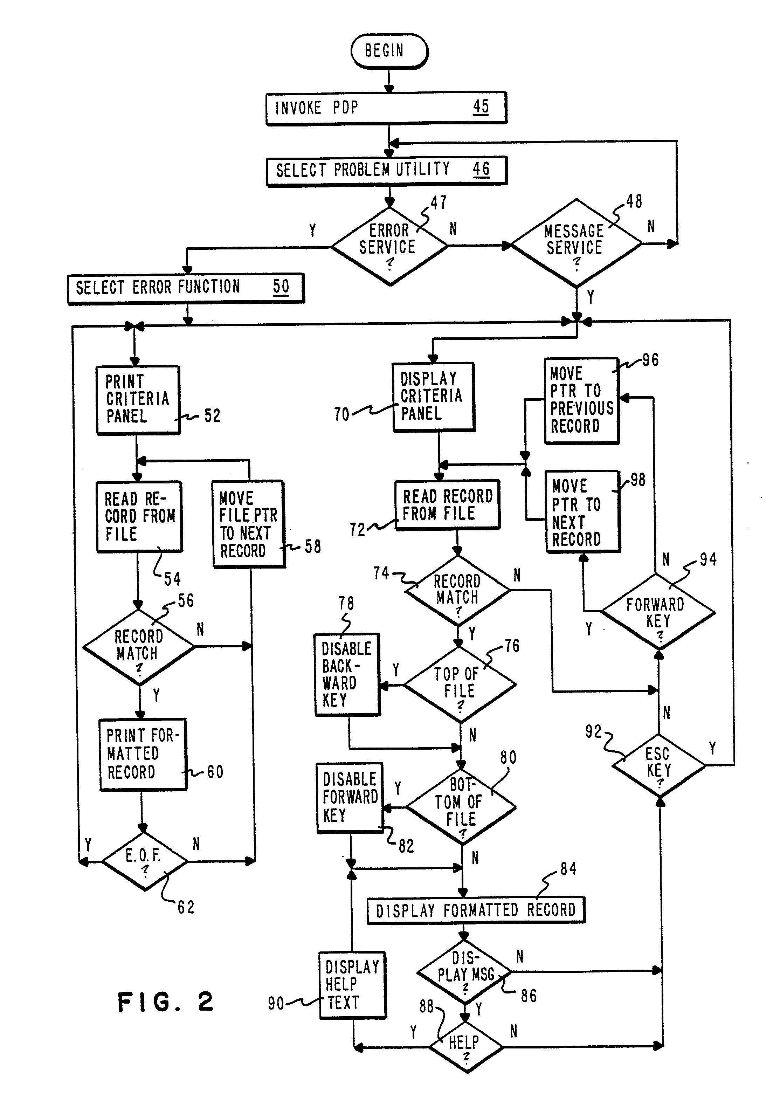

Referring to Fig. 2, there is shown a flow diagram illustrating the logical steps implemented by means of the problem determination program (PDP). After the invoking of the PDP in step 45, the PDP enables the user to select, in step 46, one of a plurality of problem determination utilities, such as the error log services or the message services. Step 47 determines whether the error services utility is selected. Step 48 determines whether the message services is selected.

## TABLE 2 - ERROR LOG SERVICES LOGIC

```
DO UNTIL ESCAPE KEY IS ACTIVATED
    INITIALISE ERROR LOG SERVICES SELECTION PANEL
    FIELDS
    DISPLAY ERROR LOG SERVICES SELECTION PANEL
    IF PRINT SELECTED THEN
        CALL PRINT SUB-ROUTINE
    ENDIF
    IF DISPLAY SELECTED THEN
        CALL DISPLAY SUB-ROUTINE
    ENDIF
ENDDO
```

If the error log services is selected, control is transferred from step 47 to step 50. In step 50, the user selects either a print function (steps 52-62) or a display function (steps 70-94) from the error log services panel. The error log services panel also displays a default error log name to be used with the selected function.

## TABLE 3 - PRINT LOGIC

```
DO UNTIL ESCAPE KEY IS ACTIVATED
    INITIALISE PRINT CRITERIA PANEL
    DISPLAY ERROR LOG PRINT CRITERIA PANEL
    IF THE ESCAPE KEY IS NOT ACTIVATED THEN
        DO UNTIL END OF FILE
            GATHER THE CRITERIA SPECIFIED
            OPEN THE SPECIFIED FILE
            READ A RECORD
            IF RECORD MATCHES THE SPECIFIED CRITERIA
              THEN
                FORMAT THE RECORD
                PRINT THE RECORD
            ENDIF
        ENDDO
    ENDIF
ENDDO
```

If the print function is selected, a print criteria panel is displayed in step 52 wherein the user enters the desired search parameters. The search parameters include a starting and ending dates and times and an error log type. If the user specifies the starting date and time, the first error log entry printed will be on or after the date/time specified. However, if the user leaves the starting date and time fields blank, the print sub-routine begins printing with the oldest error log record. If the log type specified is an entry other than "0000", only the error log entries of the specified type will be selected to be printed. In step 54, the print sub-routine reads a record from the selected error log. A determination is made in step 56 whether the record matches the search parameters. If the record does not match the search parameters, a file pointer is moved to the next subsequent record in step 58. However, if the record matches the search parameters, the record is formatted and printed in step 60. Step 62 determines whether the end of the file has been reached, if not the next record is read and the comparison is made for a match, otherwise, control is returned to step 52.

## TABLE 4 - DISPLAY LOGIC

```
DO UNTIL ESCAPE KEY IS ACTIVATED
    INITIALISE DISPLAY CRITERIA PANEL
    DISPLAY ERROR LOG DISPLAY CRITERIA PANEL
    IF THE ESCAPE KEY IS NOT ACTIVATED THEN
        OPEN THE SPECIFIED FILE
        DO WHILE ESCAPE KEY IS NOT ACTIVATED
            GATHER THE CRITERIA SPECIFIED
            READ A RECORD
            IF AT THE TOP OF FILE THEN
                DISABLE THE PAGE UP KEY
            ENDIF
            IF AT THE BOTTOM OF FILE THEN
                DISABLE THE PAGE DOWN KEY
            ENDIF
            IF THE RECORD MATCHES THE SPECIFIED
             CRITERIA THEN
                FORMAT THE RECORD
                DISPLAY THE RECORD
            ENDIF
```

```
      IF PAGE UP KEY IS PRESSED THEN
            MOVE FILE POINTER TO THE PREVIOUS RECORD
            IN THE FILE
      ENDIF
      IF THE PAGE DOWN KEY IS PRESSED THEN
            MOVE FILE POINTER TO THE NEXT RECORD IN
            THE FILE
      ENDIF
   ENDDO
 ENDIF
ENDDO
```

If the display sub-routine is selected in step 50, a display criteria panel is displayed to the user in step 70. The user then enters the appropriate search parameters which includes specifying a log name, if it is different from the default name displayed in the panel, an error log record type, and from date and time. If the user fails to enter a from date and a from time and the log type is "0000", the oldest error log is displayed and the entire specified error log will be available for display. If the entry for the log type an entry other than "0000", and the from date and time are specified, the first error log record displayed will be on or after the date/time specified and only the error log records of the specified type will be available for display. If the log type is an entry other than "0000" and the date and time are left blank, the first error log record displayed will be the oldest error log record for the specified type and only the error log records of the specified type will be available for display. Thus, step 72 reads a record from the file selected. A comparison is made in step 74 to determine whether the record matched the search parameters. If the record matches the search parameters, a determination is made in step 76 whether a file pointer is at the top of the file. Step 78 disables a backward key if the pointer is at the top of the file. A determination is made in step 80 to determine if the pointer is at the bottom of the selected file. Step 82 disables the forward key if the pointer is at the bottom of the file. In step 84, the record is formatted and displayed to the user. In step 86 a determination is made whether a message is being displayed. Since the user selected the error services in step 46, control is transferred to step 92. In step 92, a determination is made whether an escape key is activated. Control is returned to step 70, if the escape key is activated. Otherwise, step 94 determines whether the forward or backward key is activated. In step 96, if the back-ward key is activated, the pointer is moved to the immediately previous record which is then read and displayed if the record matches the search parameters. In step 98, if the forward key is activated, the pointer is moved to the immediately subsequent record which is then read and displayed if the record matches the search parameters. The procedure which includes steps 72 through 86 and 92 through 98 are repeated until the escape key is activated and detected in step 92.

## TABLE 5 - MESSAGE SERVICE LOGIC

```
DO UNTIL ESCAPE KEY IS ACTIVATED
    INITIALISE DISPLAY CRITERIA PANEL
    DISPLAY MESSAGE CRITERIA PANEL
    IF THE ESCAPE KEY IS NOT ACTIVATED THEN
        DO WHILE ESCAPE KEY IS NOT ACTIVATED
            OPEN THE SPECIFIED FILE
            READ A RECORD
            IF AT THE TOP OF FILE THEN
                DISABLE THE PAGE UP KEY
            ENDIF
            IF AT THE BOTTOM OF FILE THEN
                DISABLE THE PAGE DOWN KEY
            ENDIF


            IF THE RECORD MATCHES THE SPECIFIED
             CRITERIA THEN
                FORMAT THE RECORD
                DISPLAY THE RECORD
            ENDIF
            IF HELP KEY IS PRESSED THEN
                DISPLAY HELP TEXT
            ENDIF
            IF PAGE UP KEY IS PRESSED THEN
                MOVE FILE POINTER TO THE PREVIOUS RECORD
                IN THE FILE
            ENDIF
            IF THE PAGE DOWN KEY IS PRESSED THEN
                MOVE FILE POINTER TO THE NEXT RECORD IN
                THE FILE
            ENDIF
        ENDDO
    ENDIF
ENDDO
```

If the message services is selected in step 47, control is transferred from step 48 to step 70. Steps 70 through 86 are identical to those described for the display function of the error services utility noted above.

However, since the message services are selected in step 47, the type parameter will be replaced with an originator parameter. The originator identifies the component that generated the message and the record displayed will represent a message. Thus, control is transferred form step 86 to step 88. Step 88 determines whether the user has activated a help function. This activity indicates that the user in viewing a selected message record is requesting more detail information regarding the displayed message record. The additional information is displayed to the user in step 90 and control is returned to step 84. The system 10 will continue to display the additional information until the user activates either the backward key, the forward key or the escape key. Thereafter steps 86, and 92 through 98 are executed in the same manner described for the display function explained above for the error services utility.

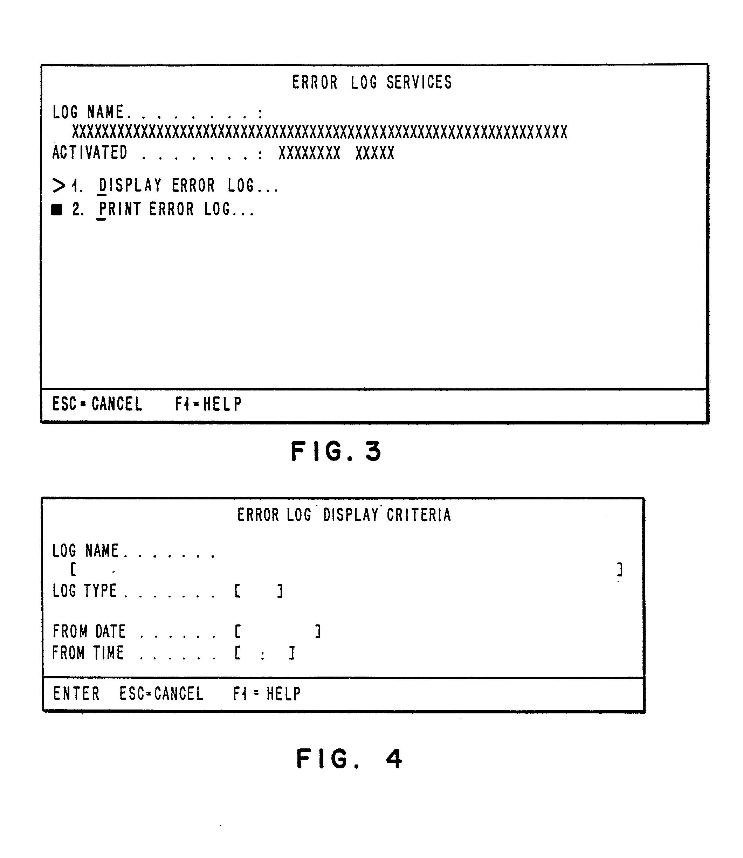

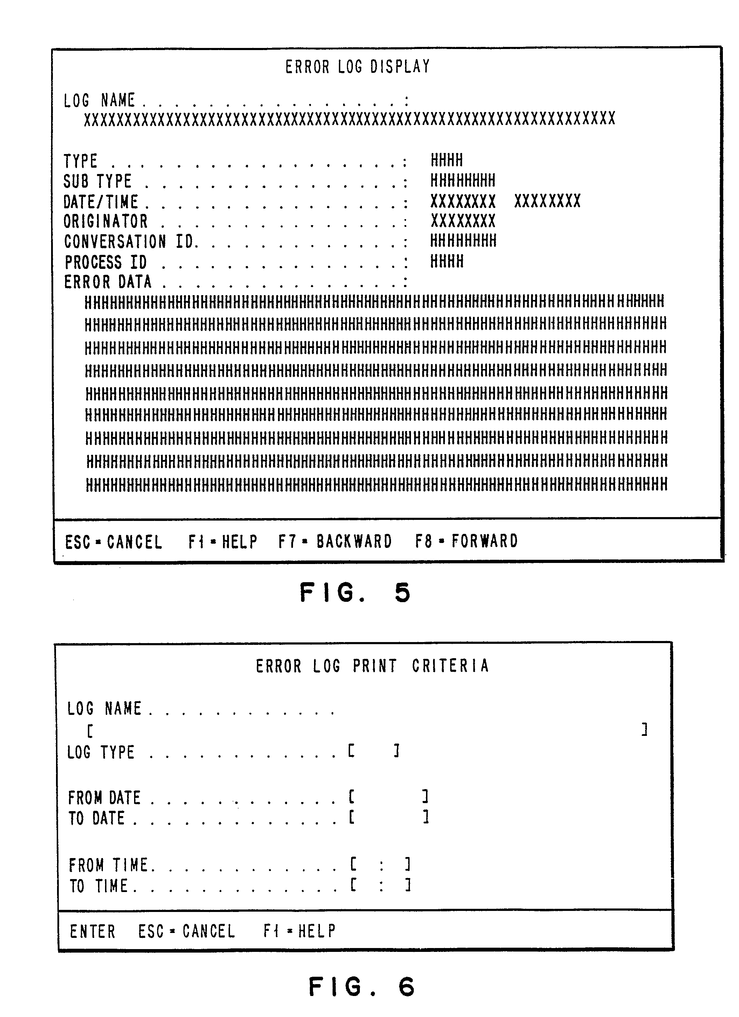

Shown in Fig. 3 is a error log services panel. This panel is displayed to the user after the error services utility is selected and allows the user to select the type of error log processing desired. The log may be printed on printer 24 (Fig. 1) or displayed on the display 20 (Fig. 1). Upon selection of one of the processing options, an error log display criteria pop-up panel, shown in Fig. 4, is displayed which allows the user to enter specific criteria for the records to be processed. The error log display criteria pop-up panel which is displayed to the user upon the selection of the display processing option. The criteria includes at least the error log record type and the time and/or the date associated with the record to be displayed. If the user desires to display an error log file other than the one currently being used, the user enters the desired error log file in the log name entry field. The criteria fields provide the user with a mechanism for specifying a starting point, from date and/or from time, and a filter, log type for the type of error the user desires to view. If the user fails to specify any criteria, which means that the date and time fields are blank and the log type is equal to "0000", the oldest error log record will be displayed which contains any type of error. If the log type is specified only, the records of the specified type will be available for display. Shown in Fig. 5 is a error log display panel which is displayed in response to the processing of the error log display criteria panel (Fig. 4). The panel includes all of the specified errors, if any, which occurred on or after the specified date and time, if specified. The "h letters" appearing in the panel indicate that the data is to be interpreted as hexadecimal and the "x letters" indicate the data is to be interpreted as ASCII. Once a record has been displayed, the user may be scroll in a forward direction or in a backward direction starting with the specified date and time to display a next or previous entries of the error log which satisfy the criteria.

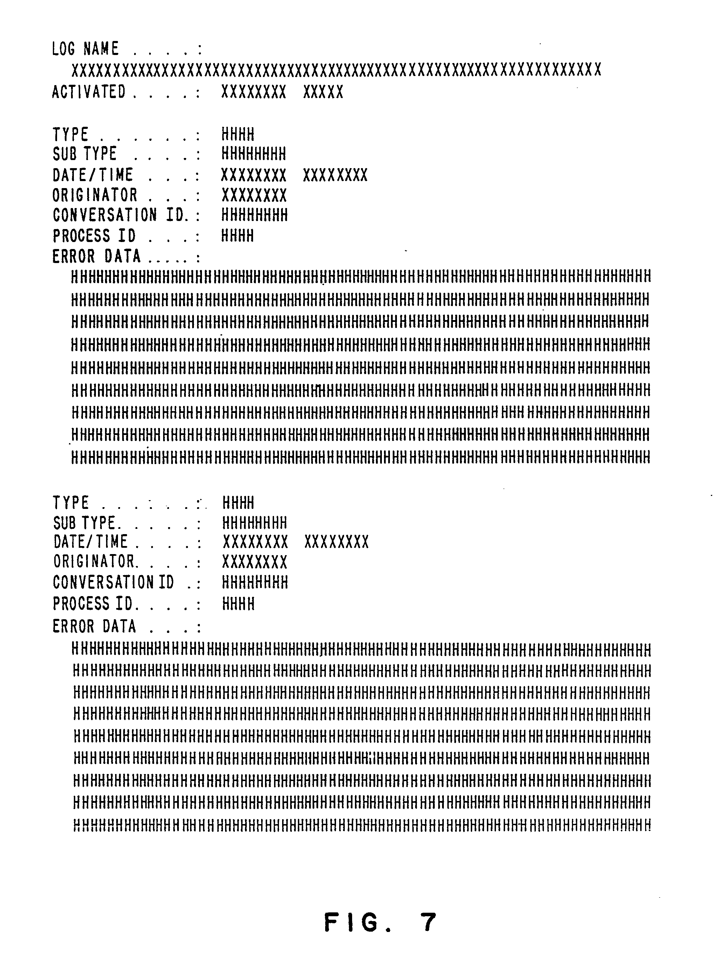

If the user selects the print processing function for the error services, an error log print criteria pop-up panel shown in Fig. 6 will be displayed to the user. This panel allows the user to enter specific criteria for selecting error log records to be printed. The criteria may include the error log record type and the time and/or date associated with the record. The user may also enter the name of an error log file other than the one currently being used. If no criteria are specified, all error log records of all types will be printed in chronological order. If the log type is specified, only the error log records of the specified type will be printed. Fig. 7 shows an example of an error log printout.

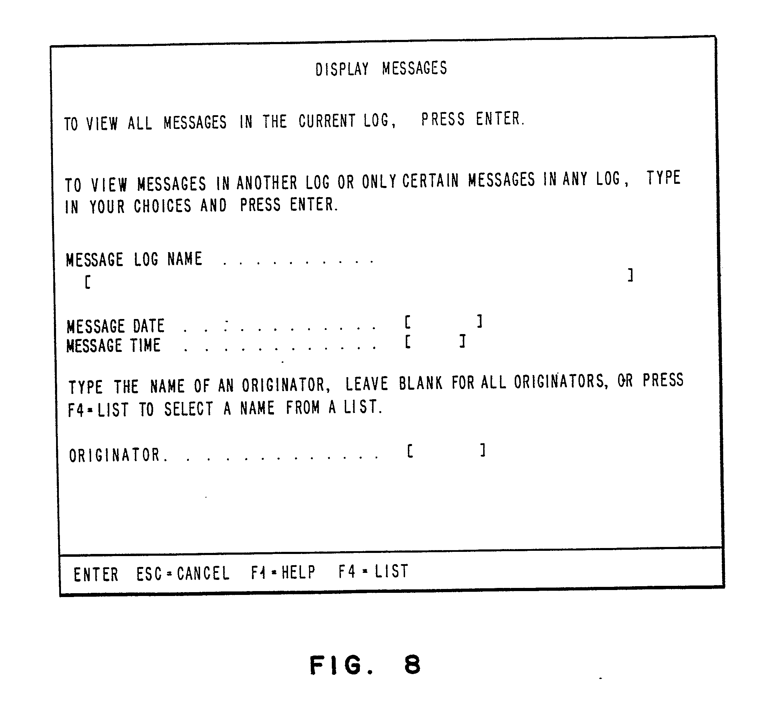

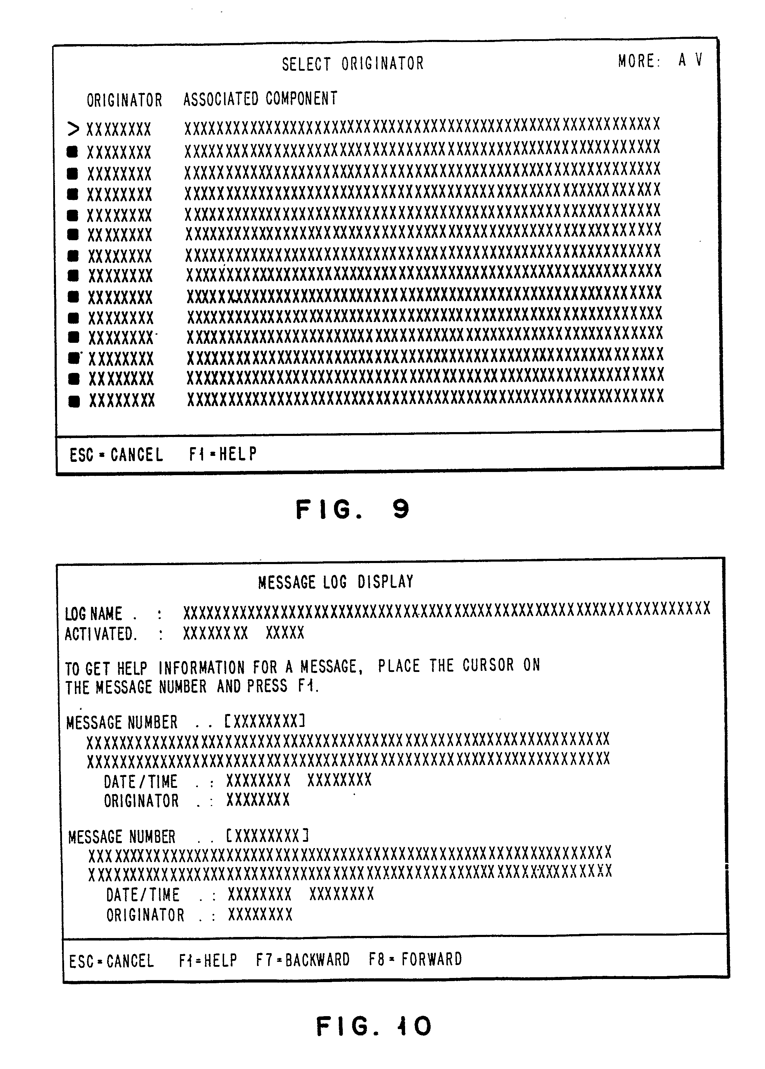

If the user selected the messages service, a display messages panel shown in Fig. 8 will be displayed to the user. The criteria fields on the panel allow the user to provide specific selection criteria for the messages to be displayed. The criteria includes a message originator, message date, and message time. The user may request that system 10 (Fig. 1) display a list of the originators, as shown in Fig. 9, which may be entered in the originator field. If no criteria is specified, the most recent messages from any originator will be displayed in chronological order with the latest message at the bottom of the display screen. If only the originator is specified, only those messages from the specified originator will be displayed. If only the time and date are specified, the first message displayed will be of any originator chronologically following the specified time and date. From this point, any messages of any originator with any time or date will be available for display. The date and time entries are primarily used to correlate a message with an associated error log entry. Fig. 10 shows a message log display panel which is displayed to the user subsequent to the processing of the display message panel (Fig. 8). In the event that there are more messages than are displayed, the user may page forward and backward to permit all of the selected messages to be viewed.

While the invention has been particularly shown and described with reference to a preferred embodiment thereof, it will be understood by those skilled in the art that various changes in form and detail may be made without departing from the scope of the appended claims.

## Claims

1. A method of filtering the retrieval of records from a plurality of records, generated internally of and by a computer system having a user interface in response to the operation or otherwise thereof, as opposed to the execution of application programs thereby, and stored in the computer system , the method comprising the steps of:

prompting a user, via the user interface, to select one of a plurality of problem determining functions;

in response to the selection made, prompting the user, via the user interface, to specify one or more parameters to be used with the selected function; and

in response to the parameters selected, indicating and retrieving a record from the stored records as a function of the parameters in the context of the selected problem determining function.

2. A method as claimed in claim 1, wherein the selected function is an error log services.

3. A method as claimed in claim 2, further comprises the step of selecting one of a plurality of utilities of the error log services.

4. A method as claimed in claim 3, wherein the step specifying one or more parameters includes the step of specifying one or more of:

an error log type;

a date component; and

a time component.

5. A method as claimed in claim 4, wherein the selected one of the plurality of utilities is a print function and further comprises the steps of:

retrieving a record from the error log services;

comparing the record to the parameters; and

printing a record if the record matches the parameters.

6. A method as claimed in claim 4 or claim 5, wherein the selected one of the plurality of utilities is a display function and further comprises the steps of:

retrieving a record from the error log services;

comparing the record to the parameters; and

displaying a record if the record matches the parameters.

7. A method as claimed in claim 6, wherein a pointer indicates the record being retrieved and further includes the steps of:

disabling a page up key if the pointer is coincident with a first record in the file; and

disabling a page down key if the pointer is coincident with a last record in the file.

8. A method as claimed in claim 7, further including the step of moving the pointer to a previous record in the file in response to the activation of the page up key or to a subsequent record in the file in response to the activation of the page down key.

9. A method as claimed in claim 1 wherein the selected function is a message services and further comprises the steps of:

retrieving a record from the message services;

comparing the record to the parameters; and

displaying a record if the record matches the parameters.

10. A method as claimed in claim 9, further includes the step of displaying additional information which is related to the displayed record in response to the activation of a help key.

11. A method as claimed in claim 10, wherein a pointer indicates the record being retrieved and further includes the steps of:

disabling a backward key if the pointer is coincident with a first record in the file; and

disabling a forward key if the pointer is coincident with a last record in the file.

12. A method as claimed in claim 11, further including the step of moving the pointer to a previous record in the file in response to the activation of the backward key or to a subsequent record in the file in response to the activation of the forward key.

F I G. 1

FIG. 2

```
                    ERROR  LOG  SERVICES
LOG NAME . . . . . . . . :
   XXXXXXXXXXXXXXXXXXXXXXXXXXXXXXXXXXXXXXXXXXXXXXXXXXXXX
ACTIVATED  . . . . . . . . :  XXXXXXX  XXXX

 > 1.  DISPLAY ERROR  LOG...
 ■ 2.  PRINT ERROR LOG...




ESC = CANCEL    F1 = HELP
```

## F I G. 3

```
               ERROR LOG  DISPLAY CRITERIA

LOG NAME . . . . . . .
   [                                                    ]
LOG TYPE . . . . . . .  [     ]

FROM DATE  . . . . . .  [         ]
FROM TIME  . . . . . .  [  :  ]

ENTER   ESC = CANCEL    F1 = HELP
```

## F I G.  4

```
                        ERROR LOG DISPLAY

LOG NAME . . . . . . . . . . . . . . . . :
    XXXXXXXXXXXXXXXXXXXXXXXXXXXXXXXXXXXXXXXXXXXXXXXXXXXXXXX


TYPE . . . . . . . . . . . . . . . . . . . :   HHHH
SUB TYPE . . . . . . . . . . . . . . . . . :   HHHHHHHH
DATE/TIME . . . . . . . . . . . . . . . . . :   XXXXXXX   XXXXXXX
ORIGINATOR . . . . . . . . . . . . . . . . :   XXXXXXX
CONVERSATION ID. . . . . . . . . . . . . . :   HHHHHHHH
PROCESS ID . . . . . . . . . . . . . . . . :   HHHH
ERROR DATA . . . . . . . . . . . . . . . . :
   HHHHHHHHHHHHHHHHHHHHHHHHHHHHHHHHHHHHHHHHHHHHHHHHHHHHHHHHHHHH HHHHH
   HHHHHHHHHHHHHHHHHHHHHHHHHHHHHHHHHHHHHHHHHHHHHHHHHHHHHHHHHHHHHHHHHH
   HHHHHHHHHHHHHHHHHHHHHHHHHHHHHHHHHHHHHHHHHHHHHHHHHHHHHHHHHHHHHHHHHH
   HHHHHHHHHHHHHHHHHHHHHHHHHHHHHHHHHHHHHHHHHHHHHHHHHHHHHHHHHHHHHHHHHH
   HHHHHHHHHHHHHHHHHHHHHHHHHHHHHHHHHHHHHHHHHHHHHHHHHHHHHHHHHHHHHHHHHH
   HHHHHHHHHHHHHHHHHHHHHHHHHHHHHHHHHHHHHHHHHHHHHHHHHHHHHHHHHHHHHHHHHH
   HHHHHHHHHHHHHHHHHHHHHHHHHHHHHHHHHHHHHHHHHHHHHHHHHHHHHHHHHHHHHHHHHH
   HHHHHHHHHHHHHHHHHHHHHHHHHHHHHHHHHHHHHHHHHHHHHHHHHHHHHHHHHHHHHHHHHH
   HHHHHHHHHHHHHHHHHHHHHHHHHHHHHHHHHHHHHHHHHHHHHHHHHHHHHHHHHHHHHHHHHH

ESC = CANCEL   F1 = HELP  F7 = BACKWARD   F8 = FORWARD
```

## FIG. 5

```
                  ERROR LOG PRINT CRITERIA

LOG NAME . . . . . . . . . . . . .
    [                                                          ]
LOG TYPE . . . . . . . . . . . . [    ]


FROM DATE . . . . . . . . . . . . [       ]
TO DATE . . . . . . . . . . . . . [       ]


FROM TIME. . . . . . . . . . . . [  :  ]
TO TIME. . . . . . . . . . . . . [  :  ]

ENTER   ESC = CANCEL   F1 = HELP
```

## FIG. 6

```
LOG NAME . . . . :
  XXXXXXXXXXXXXXXXXXXXXXXXXXXXXXXXXXXXXXXXXXXXXXXXXXXXXXXXXXXXXX
ACTIVATED . . . . :   XXXXXXXX   XXXXX

TYPE . . . . . . :   HHHH
SUB TYPE . . . . :   HHHHHHHH
DATE/TIME . . . :   XXXXXXXX   XXXXXXXX
ORIGINATOR . . . :   XXXXXXXX
CONVERSATION ID. :   HHHHHHHH
PROCESS ID . . . :   HHHH
ERROR DATA . . . . . :
  HHHHHHH HHHHHHHHHHH HHHHHHH HHHHHHHHHHHHHHHHHH HHHHHH HHHHHHH HHHHHHHHHHHHHHHHHHH
  HHHHHH HHHHHH HHH HHHHHHH HHHHHHHHHHHHHHHHHHHH HHHHH H HHHHH HHHHHHHH HHHHHHHHHHHHHHHH
  HHHHHHH HHHHH HHH HHHHHHHHHHHHHHHHHHHHHHHHHHHHHH H HHHHH HHHHHHHHH HH HHHH HHHHHHHHHHHHH
  HHHHHHH HHHHHHH HHHHHHHHHHHHHHHHHHH HHHHHHHHH HH HH H HHHHHHHH HHHHHHHHHHHHHHHHHHHHHH
  HHHHHHHHHHHHH HHHHH HHHHHHHHHHHHHHH HH HHHHHHH HHHHHHHHHH HHHHHHHHHHH HHHHHHHHHH
  HH HHHHH HHHHHHH HHHH HHHHHHH HHHHHHHHHHHHHHH H HHHHHHHH H HHHHH HHHHH HHHHHH HHHH
  HHHH HHH HHHHHHH HH HHHHHHHHHH HHHHHHHHHHHHHHHHH HHHHHHHHHH HHH HHHHHH HHHHHHHHHH
  HHHHHHHHHHH HHHHH HHHH HHHHHHH HHHH HHHHHHHHHH H H HHHHHHHHH HHH HHHHH HHHHH HHHHHHHH
  HHHH HHHHHHHHHHH HHHH HHHHHHH HHHHHHHHH H HHHHHHHHHH HHH HHHHHHHH HHHHHHHHHHHHHHHH

TYPE . . . : . . : HHHH
SUB TYPE . . . . : HHHHHHHH
DATE/TIME . . . . : XXXXXXXX   XXXXXXXX
ORIGINATOR. . . . : XXXXXXXX
CONVERSATION ID .: HHHHHHHH
PROCESS ID. . . . : HHHH
ERROR DATA . . . :
  H HHHHHH HHHHHH H HHH HHH HHHH HHHHHHHHHHHHHHHH HHH H HHHHHHHHH HH HHH HHHHHHHHHHHHHH
  HHHHHHHHHHHH HHHHH HHHHHH HHHHHHH HHHHHHHHHHH H HHHHHHHHH HHHHH HHHHHHHHHHHHH
  HHHHHHH HHHHH H HHHHHHH HHH HHHHHHHHH HHHHHHHHH HHHHHHHHHHHHHHHHHHHH H HHHHHHHHH
  H HHHHHH HHHHHH H HHHHH HHHHHHHHHHHHHHHHHHHHHH H HHHHHHHHHHHHHHHHHH HHHHHHHHHHH
  H HHHH HHHHHHH HH HHHHHH HHHHHHHHHHHH HHHHHHHHH H HHHH HHHHHHHH HHH HH HHHHHHHHHHHHH
  HHH HHHHH HHHHHHHH HH HHH HHHH HHHHHHHHH HHHHHHHHHH H HHHHHHHHH HH HHHHHHHHH HH HH HHHHHH
  HHHHHH HHHHHHHH HH HHH HHHHH HHHHHHHHH H HHHHHHHHHH H HHHH HHHHHHHH HHH HHHHHHHHHHHHHH
  H HHHHHHH HHHHH H HHHH HHHHHHH HHHHHHHHHHH HHHHHHHHH HH H HHHHHHHH HHHHHHHHHHHHHHHH
  HHHHHHHHHHHH H HHH H HHHHHHHHHHHHHHHHHHHHHHHHHHHHHHHHHHHHHHHH HHHH HHHHHHHHHHHHHH
```

## F I G .   7

```
                        DISPLAY  MESSAGES


TO VIEW ALL MESSAGES  IN THE  CURRENT LOG,   PRESS ENTER.


TO VIEW MESSAGES IN ANOTHER LOG OR ONLY CERTAIN MESSAGES IN ANY LOG,  TYPE
IN YOUR CHOICES AND  PRESS ENTER.


MESSAGE LOG NAME  . . . . . . . . . .
  [                                                                    ]


MESSAGE DATE  . . : . . . . . . . . .    [         ]
MESSAGE TIME  . . . . . . . . . . . .    [      ]

TYPE THE  NAME OF AN ORIGINATOR,  LEAVE BLANK FOR ALL ORIGINATORS, OR PRESS
F4 = LIST TO SELECT A NAME FROM A LIST.


ORIGINATOR. . . . . . . . . . . . .      [        ]



ENTER  ESC = CANCEL   F4 = HELP   F4 = LIST
```

# FIG. 8

```
                        SELECT ORIGINATOR                   MORE:  A V

       ORIGINATOR   ASSOCIATED COMPONENT

    > XXXXXXXX      XXXXXXXXXXXXXXXXXXXXXXXXXXXXXXXXXXXXXXXXXXXXXXXXXXXX
    ■ XXXXXXXX      XXXXXXXXXXXXXXXXXXXXXXXXXXXXXXXXXXXXXXXXXXXXXXXXXXXX
    ■ XXXXXXXX      XXXXXXXXXXXXXXXXXXXXXXXXXXXXXXXXXXXXXXXXXXXXXXXXXXXX
    ■ XXXXXXXX      XXXXXXXXXXXXXXXXXXXXXXXXXXXXXXXXXXXXXXXXXXXXXXXXXXXX
    ■ XXXXXXXX      XXXXXXXXXXXXXXXXXXXXXXXXXXXXXXXXXXXXXXXXXXXXXXXXXXXX
    ■ XXXXXXX       XXXXXXXXXXXXXXXXXXXXXXXXXXXXXXXXXXXXXXXXXXXXXXXXXXXX
    ■ XXXXXXXX      XXXXXXXXXXXXXXXXXXXXXXXXXXXXXXXXXXXXXXXXXXXXXXXXXXXX
    ■ XXXXXXXX      XXXXXXXXXXXXXXXXXXXXXXXXXXXXXXXXXXXXXXXXXXXXXXXXXXXX
    ■ XXXXXXXX      XXXXXXXXXXXXXXXXXXXXXXXXXXXXXXXXXXXXXXXXXXXXXXXXXXXX
    ■ XXXXXXXX      XXXXXXXXXXXXXXXXXXXXXXXXXXXXXXXXXXXXXXXXXXXXXXXXXXXX
    ■ XXXXXXXX·     XXXXXXXXXXXXXXXXXXXXXXXXXXXXXXXXXXXXXXXXXXXXXXXXXXXX
    ■·XXXXXXXX      XXXXXXXXXXXXXXXXXXXXXXXXXXXXXXXXXXXXXXXXXXXXXXXXXXXX
    ■ XXXXXXXX      XXXXXXXXXXXXXXXXXXXXXXXXXXXXXXXXXXXXXXXXXXXXXXXXXXXX
    ■ XXXXXXXX      XXXXXXXXXXXXXXXXXXXXXXXXXXXXXXXXXXXXXXXXXXXXXXXXXXXX

   ESC = CANCEL    F1 = HELP
```

## F I G.  9

```
                        MESSAGE LOG DISPLAY

   LOG NAME .   :   XXXXXXXXXXXXXXXXXXXXXXXXXXXXXXXXXXXXXXXXXXXXXXXXXXXXXXXXXXXX
   ACTIVATED.   :   XXXXXXXX   XXXXX

   TO GET HELP INFORMATION FOR A MESSAGE,  PLACE THE CURSOR ON
   THE MESSAGE NUMBER AND PRESS F1.

   MESSAGE NUMBER  .. [XXXXXXXX]
       XXXXXXXXXXXXXXXXXXXXXXXXXXXXXXXXXXXXXXXXXXXXXXXXXXXXXXXXXXXXX
       XXXXXXXXXXXXXXXXXXXXXXXXXXXXXXXXXXXXXXXXXXXXXXXXXXXXXXXXXXXXX
          DATE/TIME  . : XXXXXXXX   XXXXXXX
          ORIGINATOR  . : XXXXXXXX

   MESSAGE NUMBER   .. [XXXXXXXX]
       XXX XXXXXXXXXXXXXXXXXXXXXXXXXXXXXXXXXXXXXXXXXXXXXXXXXXXXXXXXXXX
       X XXXXXXXXXXXXXXXXXXXXXXXXXXXXXXXXX XXXXXXXXXXXXXXXX XXXXXXXXXXXXXXX
          DATE/TIME  . : XXXXXXXX   XXXXXXX
          ORIGINATOR . : XXXXXXXX

   ESC = CANCEL   F1 = HELP  F7 = BACKWARD   F8 = FORWARD
```

## F I G.  10